# EUROPEAN PATENT SPECIFICATION

(11) **EP 2 826 702 B1**
(45) Date of publication and mention of the grant of the patent: **16.01.2019**
(21) Application number: 13177109.9
(22) Date of filing: 18.07.2013
(51) Int. Cl.: B63B 1/20, B63B 1/06

(54) **Hull for an ocean-going workboat**
Rumpf für hochseetüchtiges Arbeitsboot
Coque d'un bateau usine hauturier

(43) Date of publication of application: 21.01.2015
(73) Proprietor: Baltic Workboats AS, 93872 Saare maakond (EE)
(72) Inventor: Vanaselja, Marcus, 10313 Tallinn (EE); Andreasson, Henrik, 47511 Hälsö (SE); Taal, Jüri, 10313 Tallinn (EE); Van Looy, Armand, 9250 Waasmunster (BE)
(74) Representative: Philippaerts, Yannick

(56) References cited:
- WO-A1-89/06620
- WO-A2-2010/103170
- FR-A1- 2 726 804
- US-A1- 2013 068 154

## Description

The present invention relates to an ocean-going workboat. Particularly, the present invention relates to a workboat with its main operational zone that is situated from estuary to ocean-going, wherein the hull is formed with a double chinned front section. The ocean-going workboat of the invention can therefore also be considered as a 'from estuary to ocean-going' workboat. In the further description, for the ease of explanation, only the term ocean-going is used.

Ocean-going workboats are known in the art, and are used for different purposes, these boats are particularly designed to be used on the ocean. Examples of such boats include rescue boats, patrol boats and pilot boat. To be able to be used on the ocean, these boats can withstand extreme weather conditions and high waves (waves of 2 - 3 meters high are no exception). Several hull types and designs have been used for decades to form ocean-going boats.

Another known hull design is the traditional high speed bow with falling stem. Such bow offers excellent spray handling. However such bow design suffers from high vertical accelerations, pitch motions and related problems when it is ran over high waves, since such traditional high speed bow does not restrict the vertical movement of the boat.

A first known hull type comprises a wave piercing bow. Such hull with a wave piercing bow is known to limit the vertical movement of the boat when the boat is driven over waves. Therefore such hull allows to flow through waves in a stable manner. Such hull design however suffers from a high drag, such that high speed cannot be obtained.

Recently a new hull has been designed. The new hull comprises a front section with a double chine. This new hull design is described in FR2726804, considered the closest prior art for the present invention. This new design shows a hull comprising a bow with an upper extending part and a lower extending part. The rear section of the hull is generally defined by a rear-upper wall segment and a rear lower-wall segment with a rear chine in between. The front section of the hull is generally defined by a front-upper wall segment, a front-intermediate wall segment and a front-lower wall segment respectively separated by an upper-front chine and a lower-front chine. The upper extending part is defined by the front-upper wall segment and a deck of the boat. The lower extending part of the bow is defined by the front-intermediate wall segment and the front-lower wall segment. At the bow, the front intermediate wall segment has an outer normal pointing upwards. Thereby, the lower extending part forms a generally pyramid shaped bulb that is provided to pierce through the waves of the ocean. The front intermediate wall segment shows a somewhat helical form along the length of the boat, and rotates to blend together with the front-upper wall segment into the rear-upper wall segment. This new boat design combines the advantages of the wave piercing bow hulls and the traditional high speed bow hulls. Particularly, the vertical stability of the boat is significantly increased by the intermediate wall segment and the lower extending part, which tend to pierce the waves. Yet the new hull shape remains substantially in the form of the traditionally high speed bow, such that high speeds can still be obtained.

A drawback of the hull design of FR2726804 is that it still suffers from stability problems, particularly rolling. Furthermore, when the boat is driven over the waves at a relatively high speed, the lower extending part of the hull tends to spray the ocean water over the deck thereby obstructing the view of the captain and creating green water on deck.

Other hull designs have been suggested in US20030089290 and in US7658159. However each of these hull designs suffer from stability, visibility and efficiency issues when used at higher speeds on the ocean.

It is an object of the present invention to provide an ocean-going workboat and a hull for an ocean-going workboat that performs better in terms of stability and visibility at higher speed.

To this end the invention provides an ocean-going workboat comprising a hull with a bow, a front section and a rear section, the rear section of the hull is generally defined by a rear-upper wall segment and a rear-lower wall segment with a rear-chine in between, the front section of the hull is generally defined by a front-upper wall segment, a front-intermediate wall segment and a front-lower wall segment respectively separated by an upper front-chine and a lower front-chine, the bow of the hull comprising an upper extending part defined by the front-upper wall segment and a deck of the boat, and comprising a lower extending part defined by the front-intermediate wall segment and the front-lower wall segment, wherein the front-intermediate wall segment extends from the lower extending part of the bow, where the front-intermediate wall segment has an outer normal pointing upward, to the rear-lower wall segment, having an outer normal pointing downward.

The hull of the present invention comprises a shape where the front intermediate wall segment and the front-lower wall segment blend together in the rear-lower wall segment. Tests have shown that the hull design according to the invention provides in a better stability, and a better spray-handling. The front lower wall segment shows a larger angle with the front intermediate wall segment that the angle between the front upper wall segment and the intermediate wall segment. Since the front intermediate wall segment blends together with the front lower wall segment (having the larger angle) instead of the upper wall segment, the helical shape of the front intermediate wall segment along the length of the hull extends over a larger angle, and typically in a steeper manner. This has a significant positive effect on the way the hull moves forward on the water. Particularly the ocean-going workboat of the invention performs better in terms of stability and visibility at high speeds compared to any other hull design. Thereby the hull concept of the invention combines the slender waterlines of a wave piercing bow with the flare of a traditional high speed bow with falling stem in combination with the smooth ride of the double chine hull design.

According to the invention, the upper-front chine is connected to the rear chine thereby forming a continuous chine along the hull of the boat. A chine is defined as the visible edge where two wall segments of the hull are connected to one another with an angle between the wall segments. This angle is typically measured at the inner side of the hull, and is conventionally smaller than 180 degrees. However at the bow of the ocean-going workboat according to the invention, the upper-front chine shows an angle significantly larger than 180 degrees since the front-intermediate wall segment has an outer normal pointing upwards (which is unconventional in hulls). At the rear section, the rear chine shows an angle that is smaller that 180 degrees. When this upper-front chine (with the angle significantly larger than 180 degrees) is connected to the rear chine (with an angle smaller than 180 degrees), the continuous chine shows a point along the length of the hull where the front-intermediate wall segment extends parallel to the front-upper wall segment (thus where the chine angle is 180 degrees). Thereby, the front-intermediate wall segment shows a helical orientation going from an outer normal pointing upwards at the front of the boat to an outer normal pointing downwards at the rear side of the boat. Since the upper-front chine is connected to the rear chine, the helical rotation angle is significantly larger than in the prior art. This appears to have a positive impact on both spray-handling and speed related performances.

Moreover, the hull comprises an upper-front spray-rail at the upper-front chine and a rear spray rail at the rear chine. Spray rails are generally known in the art of boat designing. Spray-rails are typically formed as flat spots (horizontal strips), placed at strategical locations on the hull to deflect water spraying upwards away from the boat. Providing a spray-rail at the upper-front chine and at the rear chine does not only prove to deflect the water in an optimal manner, it also significantly facilitates construction of the hull. At the chine, different wall segments are interconnected. At the interconnection point, a horizontal strip functioning as a spray-rail can be easily added.

Additionally, the upper-front spray-rail and the rear spray-rail are formed as one continuous spray-rail extending along the length of the hull. By providing the spray-rail in a continuous manner from the front of the hull to the rear of the hull, water is continuously deflected so that spray can be optimally handled. Furthermore, forces that act on the boat as a result of spray deflection, act in a continuous manner on the boat along the length of the boat. This increases the stability.

Furthermore, the hull comprises a lower front spray-rail at the lower-front chine. By providing a spray-rail at the lower front chine, a water spray can be deflected at a relatively low point of the hull, so that further impact on the hull of the spray is avoided.

Preferably the lower-front chine shows its smallest angle at the bow of the hull and faded out towards the rear section of the hull to blend the front-intermediate wall segment together with the front lower wall segment into the rear-lower wall segment. Thereby, fading out of the chine is defined as gradually amending the angle of the chine towards 180 degrees (where the wall segments extend parallel). By blending together the front-intermediate wall segment and the front-lower wall segment into the rear lower wall segment, the stability of the boat is significantly increased when a wave is pierced.

Preferably the lower extending part of the bow is above the waterline. Thereby, when the boat is ran over a calm water surface, the lower extending part will not submerge (even at high speeds), and the boat will flow in a similar manner than a traditional high speed bow boat. When waves appear in front of the boat, the lower extending part will pierce the waves and submerge in the water. Due to the intermediate wall segment, that has an outer normal pointing upwards, the tendency of the boat to directly rise to the top of the wave (as a result of the buoyancy force) is at least partially countered, this significantly increases the speed at which such boat can be driven over waves.

Preferably at least an outer surface of the hull is made of aluminium. Aluminium is known in the art of boat designing to be a lightweight and strong material. Thereby the chinned hull design of the present invention is particularly suitable to be formed out of aluminium.

Preferably the lower extending part of the bow comprises a block of full aluminium material, forming the tip of the lower extending part. The lower extending part is the part that, in most occurring sea conditions (varying between calm and rough), is situated at the height of the water surface. Since the water surface, particularly at sea, can contain floating elements such as wood and plastic, providing a full block of aluminium to form the lower extending tip prevents the hull from getting damaged to the point of leakage. Should the lower extending part be hollow, then the wall (separating the hollow inner side of the hull from the environment) could be pierced by, for example, a piece of wood in the water, so that the hull would leak. By providing a full aluminium block, this is prevented, again improving the performance of the boat at high speeds.

Preferably the hull is symmetrical around the plane that extends upwards and along the length of the hull. By providing the hull symmetrical, mono-hulls can be formed in a stable manner. Asymmetrical hulls can be used for catamarans, trimarans or swath boats.

Preferably an angle, measured in the symmetry plane, between the water line and the upper wall of the lower extending part is less than 30 degrees, preferably less than 25 degrees, more preferably less than 21 degrees. Thereby, the lower extending part is provided with a sharp tip. Providing such sharp tip has proven to be advantageous when piercing waves. Preferably the total length of the boat is smaller than 65m and is larger than 10m.

The invention further relates to a hull for an ocean-going workboat, the hull comprising a bow, a front section and a rear section, the rear section of the hull is generally defined by a rear-upper wall segment and a rear-lower wall segment with a rear-chine in between, the front section of the hull is generally defined by a front-upper wall segment, a front-intermediate wall segment and a front-lower wall segment respectively separated by an upper front-chine and a lower front-chine, the bow of the hull comprising an upper extending part defined by the front-upper wall segment and a deck of the boat, and comprising a lower extending part defined by the front-intermediate wall segment and the front-lower wall segment, wherein the front-intermediate wall segment extends from the lower extending part of the bow, where the front-intermediate wall segment has an outer normal pointing upward, to the rear-lower wall segment, having an outer normal pointing downward. The hull has similar technical features, and therefore similar technical effects than the hull of the ocean-going workboat that is described above. Therefore, reference is made to the description above.

The invention further relates to a method for constructing a hull as is described above, the method comprising the steps of:
- forming a set of aluminium panels according to a pre-determined pattern;
- placing the set of aluminium panels adjacent to each other to form the wall segments of the hull;
- placing a block of full aluminium to form the lower extending part of the hull;
- welding the aluminium panels against each other to obtain a solid wall.

Via the method of the invention, a hull can be formed for an ocean-going workboat.

The invention will now be described in more details with respect to the drawings illustrating some preferred embodiments of the invention. In the drawings:
figure 1 shows a schematical side view of a hull for an ocean-going workboat according to an embodiment of the invention; and

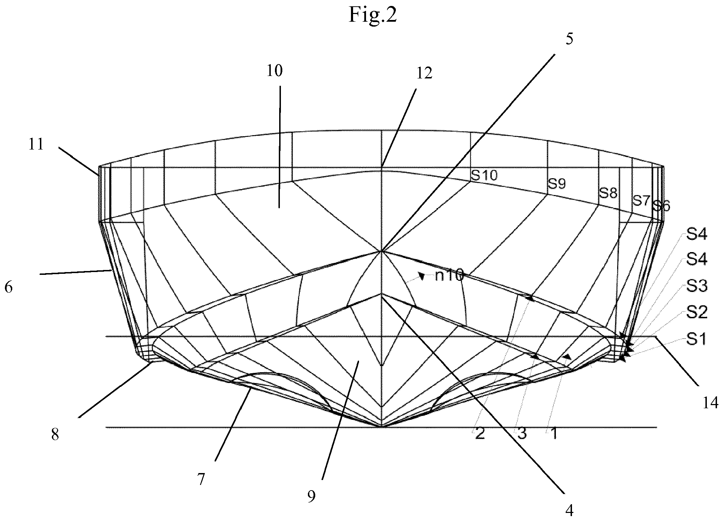

figure 2 shows a schematical front view of the hull of figure 1 for an ocean-going workboat according to an embodiment of the invention.

In the drawings a same reference number has been allocated to a same or analogous element.

The invention provides an improved hull shape of a high speed ocean going vessels in terms of sea keeping performance, spray handling, reduced secondary motions and reduced secondary accelerations compared to traditional wave piercing hulls. Thereby, it will be clear that secondary refers to 'unwanted', since primary will refer to the 'intended' motions and accelerations. The new hull concept combines the slender waterlines of a wave piercing bow with the flare of a traditional high speed bow with falling stem in combination with the smooth ride of the double chine hull design.

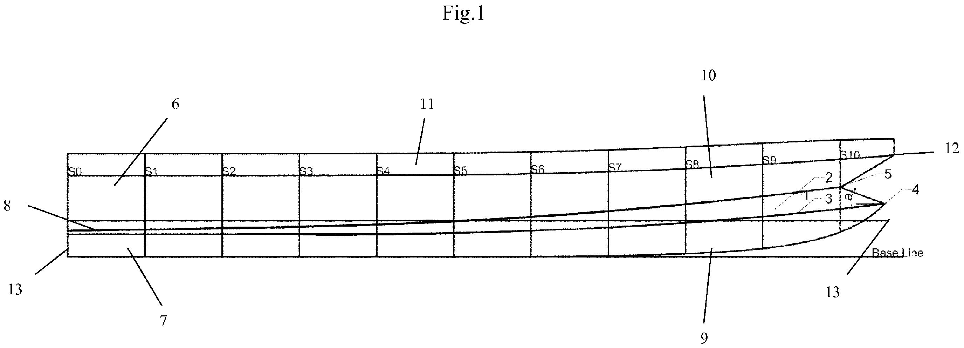

The hull comprises a rear section, a front section and a bow. In figure 1, the rear section is formed by the parts S0, S1, S2, S3 and S4. The front section is formed by the parts S5, S6, S7, S8 and S9. The bow is formed by the parts S10. It will be clear that the separation between front section and rear section of the hull cannot be sharply defined since the different wall segments form a smooth and continuous yet complex surface. Therefore the rear section of the hull can be defined to be larger or smaller than the example given above.

The rear section is generally defined by an rear-upper wall segment 6 and a rear-lower wall segment 7. These wall segments 6 and 7 are placed with an angle between each other that is, measured at the inner side of the hull, smaller than 180 degrees. The wall segments 6 and 7 show a rear chine 8 between one another. This chine 8 comprises a spray rail. The spray rail is formed as a strip that is substantially horizontal, which strip is placed between the upper wall segment and the lower wall segment. Thereby the upper wall segment 6 and the lower wall segment 7 are somewhat shifted away from one another at the chine 8. Particularly the upper wall segment 6 is displaced in the outward direction with respect to the lower wall segment 7.

Each of the wall segments 6 and 7 has an outer normal pointing downward. Furthermore, each of the wall segments 6 and 7 can deviate from a straight surface, and can comprise some gradual curvature of the surface, or some slight (less than 5 degrees) bend in the surface. When the bend in the surface is smaller than 5 degrees, the flow of water around the surface will react substantially identical to a straight surface. At the chine 8, the angle between the upper wall segment and the lower wall segment is substantially larger than 5 degrees, preferably larger than 30 degrees, preferably larger than 45 degrees. In this context, chine angle is defined as the angle measured at the inner side of the boat, meaning that the chine angle is (180 degrees - theoretical angle between the surfaces). In the above example, the chine angle is maximum 175 degrees, preferably maximum 150 degrees and preferably maximum 135 degrees.

The front segment is generally defined by a front-upper wall segment 10, a front-intermediate wall segment 1 and a front-lower wall segment 9. A front-upper chine 2 is formed between the front-upper wall segment 10 and the front-intermediate wall segment 1. A front-lower chine 3 is formed between the front-intermediate wall segment 1 and a front-lower wall segment 9. A spray rail is formed at both the upper chine 2 and the lower chine 3. This spray rail is formed as a strip that is substantially horizontal, which strip is placed between adjacent wall segments similar to the spray rail described above in relation to chine 8. Compared to traditional wave piercing bulb designs the double chine, and then especially the upper chine 2, work as an efficient spray rail, which eliminates the problem with water and spray climbing over the bulb, which will otherwise throw spray water upwards and result in green water on deck and reduce helms visibility. The double chine reduces the hull resistance by reducing the transom draft, while still offering the steeper dead rice hull lower acceleration in waves.

Where the front-upper wall segment 10 and the front-lower wall segment 9 have an outer normal pointing downward, the front-intermediate wall segment 1 has an outer normal pointing upward (at least at the location of the bow, as will be further explained). The front-intermediate wall segment 1 comprises a helical shape with an outer normal pointing upward at the front end of the hull and wherein the outer normal rotates along the length of the hull to point downward in a middle part of the hull.

Particularly the front-intermediate wall segment 1 is formed so that the outer normal is substantially parallel to the outer normal of the front-lower wall segment 9 at the rear end of the front section of the hull (thus at section S5). In this context, substantially parallel is defined as showing an angle less than 5 degrees between the outer normals. Furthermore, each of the wall segments 1, 9 and 10 can deviate from a straight surface, and can comprise some gradual curvature of the surface, or some slight (less than 5 degrees) bend in the surface.

The bow shows two extending parts, particularly an upper extending part 12 and a lower extending part 4. The lower extending part 4 is referred to as the bulb. The upper extending part 12 is formed by the front-upper wall segment 10 and the deck of the boat. Particularly, the upper extending part 12 is formed at the location where the front-upper wall segment 10 of the left-hand side of the hull meets the front-upper wall segment 10 of the right-hand side of the boat. Since the front-upper wall segment 10 has an outer normal pointing downward, bringing together a left and a right front-upper wall segment 10 results in a pyramid-shaped extension. Preferably, the upper extending 12 part preferably extends further than the lower extending part 4.

The lower extending part 4, or the bulb 4, is formed by the front-intermediate wall segment 1 and the front-lower wall segment 9. Particularly, the lower extending part 4 is formed at the location where the front-intermediate and front-lower wall segments 1, 9 of the left-hand side of the hull meet front-intermediate and front-lower wall segments 1, 9 of the right-hand side of the boat. Since the front-intermediate wall segment 1 has an outer normal pointing upward, and the front-lower wall segment 9 has an outer normal pointing downward, bringing together a left and a right intermediate and lower wall segment 1, 9 results in a pyramid-shaped extension. For larger pith exaltation the bulb offers passive pitch damping due to the chine of the bulb and the water pressure on the upper part of the bulb (that is formed by the intermediate wall segment), which counter balances the upwards directed lift force from the rest of the bow when meeting a wave crest.

The lower extending part 4 is designed to be situated above the waterline. Thereby, during calm water operation at speed, the bulb 4 is working as an extension of the hull lines and the surfaces above the bulb chine 3 are totally out of the water. When the boat operates in sea waves and the hull starts to pitch the slender bow cuts easy through the waves as a traditional wave piercing hull. For larger pitch exaltation the bulb submerges and then offers passive pitch damping due to the chine of the bulb and the water pressure on the upper part of the bulb, which counter balance the upwards directed lift force from the rest of the bow when meeting a wave crest. The spray rail chine 2 above bulb 4 prevents the spray from the bulb to reach higher and thereby significantly improves the spray handling and reduces green water on deck.

The double chine hull design offers smaller vertical accelerations due to stepper dead rise close to design water line while still allowing less dead rise of bottom panels below the lower chine and thereby a low hull resistance

The hull is generally defined by a double chine hull where the bottom front-intermediate surface 1 between the upper chine 2 and lower chine 3 converts forward to the upper part of the bulb by twisting the surface panel. This means that the surface normal of surface panel 1 is angled downwards at transom 13 (the most rearward part of the rear section of the hull), while angled upwards at the bulb 4. The lower chine 3 preferably starts at the forward tip of the bulb 4 and blend into the bottom panel at transom. The upper chine start at the intersection between bulb and stem above bulb (lower outer surface of the upper extension part 12) and continues all the way to transom 13. The bulb profile angle a (angle of the upper surface of the bulb measured in the symmetry plane of the hull and measured with respect to the waterline) is preferably less than 21 degrees and smaller than the stem above. The lower chine 3 width at bulb 4 at the intersection of section S10 and section S9 is preferably about 15% of the upper chine 2 width at transom 13. The longitudinal distance from transom 13 to the forward end 5 of upper chine 5 is between 2% and 10% shorter, preferably between 4% and 7% shorter, most preferably about 5.5% shorter than longitudinal distance from transom 13 to the forward tip of the bulb 4.

The hull of the invention combines the slender waterlines of the wave piercing beak and the double chine, thereby reducing the hull resistance by reducing the transom draft, while still offering steeper dead rise hull with lower vertical acceleration in ocean waves conditions. During the occurrence of larger pitch exaltation, the wave piercing design offers passive pitch damping due to the chine of the wave piercing beak and the water pressure on the upper part of the beak, which counter balances the lifting force directed upwards from the rest of the bow when meeting an ocean wave crest.

Preferably, the longitudinal distance from transom 13 to the forward tip of the bulb 4 is less than 5% different from the longitudinal distance from transom 13 to the forward tip of the upper extension part 12 , preferably less than 3% different. More preferably, the longitudinal distance from transom 13 to the forward tip of the bulb 4 between 96% and 100%, preferably between 98% and 99% from the longitudinal distance from transom 13 to the forward tip of the upper extension part 12. Thereby, the upper extension part 12 extends further than the bulb 4.

The hull is preferably constructed using pre-manufactured surfaces to simplify the use of aluminum as building material. Thereby, a frame can be provided with beams that extend at least along the above-described chines of the hull. To these beams, pre-manufactured surfaces are mounted. For example, there is a pre-manufactured surface for each wall segment (upper, intermediate, lower) and for each of the segments (S0, S1, ..., S10) of the hull. These pre-manufactured surfaces can be welded together. The bulb 4 is preferably formed by a full block of aluminium material.

The bulb is preferably constructed with a tip showing an angle measured in a horizontal plane (or between lower chine 3 at the left side of the hull and the lower chine 3 at the right side of the hull) larger than 15 degrees, preferably larger than 25 degrees, more preferably larger than 30 degrees, and smaller than 50 degrees, preferably smaller than 40 degrees, more preferably smaller than 35 degrees. Most preferably the tip shows an angle measured in a horizontal plane (or between lower chine 3 at the left side of the hull and the lower chine 3 at the right side of the hull) of about 32 degrees.

In the vertical plane, the tip shows an angle that is preferably larger than 50 degrees, more preferably larger than 60 degrees, and that is preferably smaller than 75 degrees, more preferably smaller than 65 degrees. Most preferably the bulb tip shows an angle in the vertical plane of around 63 degrees. Thereby, it will be clear for the skilled person that the tip can be somewhat rounded off with a radius of curvature that is smaller than 500mm, preferably smaller than 300mm, more preferably smaller than 100mm.

Compared to a vertical stem wave piercing hull, the bulb design of the invention offers less transverse wind area, which result in less rudder helm needed to keep the boat on course in side wind. Thereby this hull concept will need less heeling towards the wind while operating in side wind condition

## Claims

1. An ocean-going workboat comprising a hull with a bow, a front section and a rear section, the rear section of the hull is generally defined by a rear-upper wall segment (6) and a rear-lower wall segment (7) with a rear-chine (8) in between, the front section of the hull is generally defined by a front-upper wall segment (10), a front-intermediate wall segment (1) and a front-lower wall segment (9) respectively separated by an upper front-chine (2) and a lower front-chine (3), the bow of the hull comprising an upper extending part (12) defined by the front-upper wall segment (10) and a deck of the boat, and comprising a lower extending part (4) defined by the front-intermediate wall segment (1) and the front-lower wall segment (9), wherein the front-intermediate wall segment (1) extends from the lower extending part (4) of the bow, **characterized in that** the front-intermediate wall segment has an outer normal (n10) pointing upward, to the rear-lower wall segment (7), having an outer normal pointing downward, wherein the upper front-chine (2) is connected to the rear-chine (8) thereby forming a continuous chine along the hull of the boat, wherein the hull comprises an upper-front spray-rail at the upper-front chine (2) and a rear spray-rail at the rear-chine (8), wherein the upper-front spray-rail and the rear spray-rail are formed as one continuous spray-rail extending along the length of the hull, wherein the hull comprises a lower-front spray-rail at the lower-front chine (3).

2. The ocean-going workboat of claim 1, wherein the lower front-chine (3) shows its smallest angle at the bow of the hull and fades out towards the rear section of the hull to blend the front-intermediate wall segment (1) together with the front-lower wall segment (9) into the rear-lower wall segment (7).

3. The ocean-going workboat of any one of the previous claims, wherein the lower extending part (4) of the bow is above the waterline.

4. The ocean-going workboat of any one of the previous claims, wherein at least an outer surface of the hull is made of aluminium.

5. The ocean-going workboat of any one of the previous claims, wherein the lower extending part (4) of the bow comprises a block of full aluminium material forming the tip of the lower extending part.

6. The ocean-going workboat of any one of the previous claims, wherein the hull is symmetrical around a plane that extends upward and along the length of the hull.

7. The ocean-going workboat of claim 6, wherein an angle, measured in said plane, between the waterline and the upper wall of the lower extending part, is less than 30 degrees, preferably less than 25 degrees, more preferably less than 21 degrees.

8. The ocean-going workboat of claim 6, wherein the total length of the boat is smaller than 65 meter and is larger than 10 meter.

9. Method of constructing a hull adapted for an ocean going workboat as claimed in any one of the previous claims, the method comprising the steps of:
- forming a set of aluminium panels according to a pre-determined pattern;
- placing the set of aluminium panels adjacent to each other to form the wall segments of the hull;
- placing a block of full aluminium to form the lower extending part (4) of the hull;
- welding the aluminium panels against each other to obtain a solid wall.

## Patentansprüche

1. Hochseetüchtiges Arbeitsboot, das aufweist: einen Rumpf mit einem Bug, einen vorderen Abschnitt und einen hinteren Abschnitt, wobei der hintere Abschnitt des Rumpfes im Allgemeinen durch ein hinteres oberes Wandsegment (6) und ein hinteres unteres Wandsegment (7) mit einer hinteren Kimm (8) dazwischen definiert ist, wobei der vordere Abschnitt des Rumpfes im Allgemeinen durch ein vorderes oberes Wandsegment (10), ein vorderes Zwischenwandsegment (1) und ein vorderes unteres Wandsegment (9) definiert ist, die jeweils von einer oberen vorderen Kimm (2) und einer unteren vorderen Kimm (3) getrennt sind, wobei der Bug des Rumpfes einen oberen Erstreckungsteil (12), der durch das vordere obere Wandsegment (10) und ein Deck des Boots definiert ist, und einen unteren Erstreckungsteil (4), der durch das vordere Zwischenwandsegment (1) und das vordere untere Wandsegment (9) definiert ist, aufweist, wobei das vordere Zwischenwandsegment (1) sich von dem unteren Erstreckungsteil (4) des Bugs erstreckt, **dadurch gekennzeichnet, dass**
das vordere Zwischenwandsegment eine äußere Normale (n10) hat, die nach oben zu dem hinteren unteren Wandsegment (7) zeigt, welches eine äußere Normale hat, die nach unten zeigt, wobei die obere vordere Kimm (2) mit der hinteren Kimm (8) verbunden ist und dadurch eine kontinuierliche Kimm entlang des Rumpfes des Boots bildet, wobei der Rumpf eine obere vordere Spritzleiste an der oberen vorderen Kimm (2) und eine hintere Spritzleiste an der hinteren Kimm (8) aufweist, wobei die obere vordere Spritzleiste und die hintere Spritzleiste als eine kontinuierliche Spritzleiste ausgebildet sind, die sich entlang der Länge des Rumpfes erstreckt, wobei der Rumpf eine untere vordere Spritzleiste an der unteren vorderen Kimm (3) aufweist.

2. Hochseetüchtiges Arbeitsboot nach Anspruch 1, wobei die untere vordere Kimm (3) ihren kleinsten Winkel an dem Bug des Rumpfes zeigt und in Richtung des hinteren Abschnitts des Rumpfes abnimmt, um das vordere Zwischenwandsegment (1) zusammen mit dem vorderen unteren Wandsegment (9) in das hintere untere Wandsegment (7) zu verschmelzen.

3. Hochseetüchtiges Arbeitsboot nach einem der vorhergehenden Ansprüche, wobei der untere Erstreckungsteil (4) des Bugs über der Wasserlinie ist.

4. Hochseetüchtiges Arbeitsboot nach einem der vorhergehenden Ansprüche, wobei wenigstens eine Außenoberfläche des Rumpfes aus Aluminium hergestellt ist.

5. Hochseetüchtiges Arbeitsboot nach einem der vorhergehenden Ansprüche, wobei der untere Erstreckungsteil (4) des Bugs einen Block aus Vollaluminiummaterial aufweist, der die Spitze des unteren Erstreckungsteils bildet.

6. Hochseetüchtiges Arbeitsboot nach einem der vorhergehenden Ansprüche, wobei der Rumpf um eine Ebene, die sich nach oben und entlang der Länge des Rumpfs erstreckt, symmetrisch ist.

7. Hochseetüchtiges Arbeitsboot nach Anspruch 6, wobei ein in dieser Ebene gemessener Winkel zwischen der Wasserlinie und der oberen Wand des unteren Erstreckungsteils kleiner als 30 Grad, vorzugsweise kleiner als 25 Grad, bevorzugter kleiner als 21 Grad, ist.

8. Hochseetüchtiges Arbeitsboot nach Anspruch 6, wobei die Gesamtlänge des Boots kleiner als 65 Meter und größer als 10 Meter ist.

9. Verfahren für den Bau eines Rumpfs, der für ein hochseetüchtiges Arbeitsboot nach einem der vorhergehenden Ansprüche geeignet ist, wobei das Verfahren die folgenden Schritte aufweist:
- Ausbilden eines Satzes von Aluminiumplatten gemäß einem vorgegebenen Muster;
- Anordnen des Satzes von Aluminiumplatten benachbart zueinander, um die Wandsegmente des Rumpfes auszubilden;
- Anordnen eines Aluminiumblocks, um den unteren Erstreckungsteil (4) des Rumpfes auszubilden;
- Schweißen der Aluminiumplatten gegeneinander, um eine massive Wand zu erhalten.

## Revendications

1. Bateau-usine hauturier comprenant une coque avec une proue, une section avant et une section arrière, la section arrière de la coque est généralement définie par un segment de paroi arrière-supérieur (6) et un segment de paroi arrière-inférieur (7) avec un bouchain arrière (8) entre eux, la section avant de la coque est généralement définie par un segment de paroi avant-supérieur (10), un segment de paroi avant-intermédiaire (1) et un segment de paroi avant-inférieur (9) respectivement séparés par un bouchain avant supérieur (2) et un bouchain avant inférieur (3), la proue de la coque comprenant une partie d'extension supérieure (12) définie par le segment de paroi avant-supérieur (10) et un pont du bateau, et comprenant une partie d'extension inférieure (4) définie par le segment de paroi avant-intermédiaire (1) et le segment de paroi avant-inférieur (9), dans lequel le segment de paroi avant-intermédiaire (1) s'étend depuis la partie d'extension inférieure (4) de la coque, **caractérisé en ce que** le segment de paroi avant-intermédiaire a une normale extérieure (n10) pointant vers le haut, jusqu'au segment de paroi arrière-inférieure (7), avant une normale extérieure point vers le bas, dans lequel le bouchain avant supérieur (2) est relié au bouchain arrière (8) formant ainsi un bouchain continu le long de la coque du bateau, dans lequel la coque comprend un rail de pulvérisation supérieur-avant au niveau du bouchain supérieur-avant (2) et un rail de pulvérisation arrière au niveau du bouchain arrière (8), dans lequel le rail de pulvérisation supérieur-avant et le rail de pulvérisation arrière sont formés comme un seul rail de pulvérisation continu s'étendant sur la longueur de la coque, dans lequel la coque comprend un rail de pulvérisation inférieur-avant au niveau du bouchain inférieur-avant (3).

2. Bateau-usine hauturier selon la revendication 1, dans lequel le bouchain avant inférieur (3) présente son angle le plus petit au niveau de la proue de la coque et fond vers la section arrière de la coque pour mélanger le segment de paroi avant-intermédiaire (1) avec le segment de paroi avant-inférieur (9) dans le segment de paroi arrière-inférieur (7).

3. Bateau-usine hauturier selon l'une quelconque des revendications précédentes, dans lequel la partie d'extension inférieure (4) de la proue est au-dessus de la ligne d'eau.

4. Bateau-usine hauturier selon l'une quelconque des revendications précédentes, dans lequel au moins une surface extérieure de la coque est composée d'aluminium.

5. Bateau-usine hauturier selon l'une quelconque des revendications précédentes, dans lequel la partie d'extension inférieure (4) de la proue comprend un bloc de matériau aluminium plein formant la pointe de la partie d'extension inférieure.

6. Bateau-usine hauturier selon l'une quelconque des revendications précédentes, dans lequel la coque est symétrique autour d'un plan qui s'étend vers le haut et sur la longueur de la coque.

7. Bateau-usine hauturier selon la revendication 6, dans lequel un angle, mesuré dans ledit plan, entre la ligne d'eau et la paroi supérieure de la partie d'extension inférieure, est inférieur à 30 degrés, de préférence inférieur à 25 degrés, plus préférablement inférieur à 21 degrés.

8. Bateau-usine hauturier selon la revendication 6, dans lequel la longueur totale du bateau est inférieure à 65 mètres et est supérieure à 10 mètres.

9. Procédé de construction d'une coque adaptée pour un bateau-usine hauturier selon l'une quelconque des revendications précédentes, le procédé comprenant les étapes de :
- formation d'un ensemble de panneaux d'aluminium selon un motif prédéfini ;
- mise en place de l'ensemble de panneaux d'aluminium de manière adjacente les uns aux autres pour former les segments de paroi de la coque ;
- mise en place d'un bloc d'aluminium plein pour former la partie d'extension inférieure (4) de la coque ;
- soudage des panneaux d'aluminium les uns contre les autres pour obtenir une paroi solide.
